Europäisches Patentamt

(19) **European Patent Office**

**Office européen des brevets**

(11) Numéro de publication: **0 112 212**
**A2**

## DEMANDE DE BREVET EUROPEEN

(21) Numéro de dépôt: **83402254.3**

(22) Date de dépôt: **23.11.83**

(51) Int. Cl.³: **G 21 C 1/02**
**F 16 L 27/02, G 21 C 15/24**

(30) Priorité: **10.12.82 FR 8220692**

(43) Date de publication de la demande:
**27.06.84 Bulletin 84/26**

(84) Etats contractants désignés:
**DE FR GB IT**

(71) Demandeur: JEUMONT-SCHNEIDER Société anonyme dite:
31-32, Quai de Dion Bouton
F-92811 Puteaux Cedex(FR)

(72) Inventeur: Delloye, Nicolas
8, rue Ambroise Thomas Les Marzelles
F-59460 Jeumont(FR)

(72) Inventeur: Denimal, Philippe
3, rue Ambroise Thomas Les Marzelles
F-59460 Jeumont(FR)

(74) Mandataire: Lejet, Christian
Société JEUMONT-SCHNEIDER 31-32, Quai de Dion Bouton
F-92811 Puteaux Cedex(FR)

(54) Elément de liaison entre une pompe primaire et le conduit de refoulement pour surrégénérateur de type piscine.

(57) L'invention concerne un élément de liaison entre la pompe primaire et le conduit de refoulement dans un surrégénérateur de type piscine, agencé pour assurer l'étanchéité entre la zone de basse pression et la zone de haute pression de la pompe et pour autoriser des déplacements horizontaux et verticaux entre la pompe et le conduit.

Cet élément comporte une manchette (1) s'étendant entre la partie de refoulement (6) de la pompe primaire et le conduit de refoulement (14) entre la manchette et la partie de refoulement de la pompe primaire, une liaison à rotule (3,9) associée à des moyens d'étanchéité sphériques (10,11,12,13), et entre la manchette et le conduit de refoulement, des moyens d'étanchéité sphériques (17,18,19).

Cet élément comporte en outre des moyens de guidage de la manchette dans le conduit de refoulement à des fins de simplification du montage.

Application aux réacteurs nucléaires.

EP 0 112 212 A2

Elément de liaison entre une pompe primaire et le conduit
de refoulement pour surrégénérateur de type piscine.


La présente invention concerne les surrégénérateurs de
type piscine comprenant une pompe primaire, par exemple
au sodium, s'emboîtant dans un conduit de refoulement,
et couramment utilisés dans certains réacteurs nucléaires.
On sait que, lors de sa mise en place dans un réacteur,
la pompe primaire d'un surrégénérateur de type piscine doit
s'emboîter dans le conduit ou sphère de refoulement associé
de façon à assurer une bonne étanchéité entre la zone de
refoulement de la pompe, à haute pression, et la zone d'aspiration de la pompe, à basse pression.
En outre, il existe entre la partie haute et la partie basse
de la pompe des différences de températures très élevées
dans les matériaux, entraînant des dilatations thermiques
importantes et non uniformes. En conséquence ,il faut que
la liaison, outre son étanchéité, autorise des déplacements
importants (de l'ordre de $\pm$ 100 mm) permettant de compenser
ces dilatations non symétriques, aussi bien axialement que
radialement.

Dans les surrégénérateurs de faible puissance, on sait
prévoir un élément de liaison constitué d'un manchon cylindrique à double articulation, dont le rapport longueur /
diamètre permet de très faibles déplacements horizontaux.
Cependant les contraintes de serrage des articulations,
ainsi que le faible rotulage autorisé, rendent ce procédé
désavantageux.
Dans les surrégénérateurs de plus grande puissance, il
devient impossible de faire appel à un tel manchon, dont
la longueur est alors inacceptable. Dans ce cas la pompe
est suspendue par des moyens élastiques sur la dalle de
fermeture du réacteur, et s'emboîte dans le conduit de refoulement par l'intermédiaire d'une liaison souple.
Cependant une telle solution est onéreuse et ne permet pas un rotulage suffisant.

Enfin , on connaît par la demande de brevet publiée No 81 02456 un élément de liaison entre une pompe primaire au sodium d'un surrégénérateur de type piscine et un conduit de refoulement, constitué d'un manchon cylindrique associé à une butée plane, de façon à former un joint hydrostatique. L'étanchéité est assurée , sur le manchon, par un joint à labyrinthe. Cet élément de liaison présente cependant deux inconvénients majeurs : d'une part l'étanchéité n'est pas parfaite et dépend largement du régime de fonctionnement de la pompe; d'autre part, sous régime inverse, la continuité hydraulique n'est plus assurée, ce qui entraîne des pertes de charge et un risque d'instabilité.

La présente invention vise à pallier ces inconvénients et à proposer un élément de liaison du type mentionné dans le paragraphe d'introduction qui assure une excellente continuité hydraulique dans les deux sens de fonctionnement, ainsi qu'une meilleure étanchéité, tout en autorisant les déplacements de compensation de la dilatation thermique.

A cet effet, la présente invention concerne un élément de liaison entre une pompe primaire et le conduit de refoulement dans un surrégénérateur de type piscine, agencé pour assurer l'étanchéité entre la zone de basse pression et la zone de haute pression de la pompe et pour autoriser des déplacements horizontaux et verticaux entre la pompe et le conduit, caractérisé par le fait qu'il comporte une manchette s'étendant entre la partie de refoulement de la pompe primaire et le conduit de refoulement, entre la manchette et la partie de refoulement de la pompe primaire, une liaison à rotule associée à des moyens d'étanchéité sphériques, et entre la manchette et le conduit de refoulement, des moyens d'étanchéité sphériques.

Les moyens d'étanchéité sphériques sont, de façon préférée, de type à labyrinthe ou à segments. En outre il est avantageux de prévoir, autour de l'entrée du conduit de refoulement, des moyens de guidage de la manchette, par exemple sous la forme d'une collerette de forme tronconique.

Un autre avantage de la présente invention réside dans le fait que des angles de rotulage importants peuvent être acceptés, grâce à la liaison par rotule mentionnée ci-dessus, avec une étanchéité qui demeure satisfaisante.

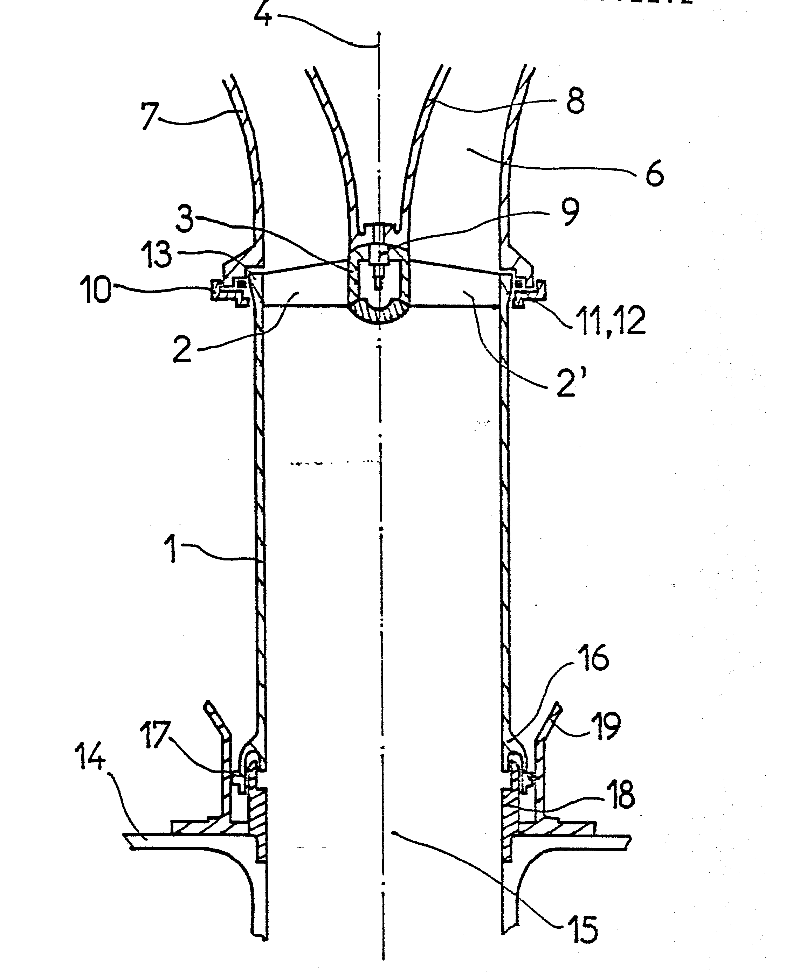

L'invention sera mieux comprise à la lecture de la description d'une forme de réalisation préférée de liaison selon l'invention, faite en référence au dessin annexé sur lequel la Figure unique représente une vue en coupe axiale de la liaison selon l'invention.

Sur la figure est représentée une manchette ou virole cylindrique 1, dont l'axe est indiqué par la référence 4, et qui comporte dans sa partie supérieure quatre bras radiaux, dont deux sont représentés en 2, 2' , s'étendant vers l'intérieur et destinés à supporter un boîtier 3, centré sur l'axe 4 de la virole 1. S'étendant au-dessus de la virole 1 est représentée la partie basse du refoulement 6 d'une pompe primaire (non représentée), également centrée sur l'axe 4, tout au moins à chaud, c'est-à-dire en fonctionnement, dont la paroi extérieure 7 est de forme sensiblement tronconique, et la paroi intérieure 8 définit sensiblement un cône dont la pointe est dirigée vers le bas.
La pompe mentionnée ci-dessus peut notamment être une pompe primaire au sodium de surrégénérateur de type piscine, destiné aux réacteurs à neutrons rapides.

Du sommet du cône est solidaire une rotule 9, centrée sur l'axe 4, et s'emboîtant dans le boîtier 3 de façon à former, entre la virole et le refoulement, une liaison à rotule centrée sur l'axe 4.

L'étanchéité entre ces deux éléments est obtenue par une mise en forme appropriée de l'extrémité supérieure de la virole 1 et de l'extrémité inférieure de la paroi extérieure 7 du refoulement 6 de la pompe, au moyen de paliers, brides, collerettes, etc... dont l'Homme de l'Art connait les agencements classiques. Dans le cas présent, un collier 10 maintient en place deux segments 11, 12 logés entre la paroi extérieure 7 et la virole 1, et qui s'appuient, sur la virole, sur une surface constituée d'une portion de sphère 13. Ce double segmentage assure une étanchéité de type sphérique.

Sur la partie inférieure du dessin est représentée la partie d'extrémité supérieure 14 d'une sphère de refoulement dont l'axe vertical, à chaud, est également l'axe 4. La sphère 14 comprend une ouverture circulaire 15 centrée sur l'axe 4, et dont le diamètre est sensiblement égal au diamètre de la virole 1. L'extrémité inférieure de la virole 1 comporte un élargissement annulaire 16, muni à son extrémité inférieure d'un segment d'étanchéité 17 agencé pour se loger, lors de la mise en place de l'ensemble, entre deux brides prévues autour de l'ouverture circulaire 15, l'une , 18, intérieure et dont le diamètre est sensiblement égal à celui de l'ouverture 15, et l'autre 19, extérieure, dont le diamètre est choisi de façon à ce que la surface extérieure du segment 17 vienne en contact intime avec sa surface intérieure. On a ainsi défini une étanchéité de type sphérique dans la mesure où la surface intérieure de la bride extérieure 19 définit une portion de sphère.

L'élément de liaison tel que décrit ci-dessus, tout en permettant, grâce à la rotule, un rotulage important, assure également une étanchéité satisfaisante par les deux joints sphériques; en outre la continuité hydraulique est parfaitement assurée, la section du refoulement à travers l'élément de liaison restant constante de la pompe à la

0112212

sphère de refoulement.

Bien entendu la présente invention n'est pas limitée à la description ci-dessus et inclut toutes les modifications ou améliorations que pourra y apporter l'Homme de l'Art dans le cadre de ses connaissances normales.

En particulier, on adaptera l'invention aux configurations particulières de la pompe et du conduit de refoulement sans sortir de son cadre.

On notera en outre qu'à des fins de simplification lors du montage de l'ensemble, la bride 19 comporte une partie tronconique, adjacente à la partie destinée à être en contact avec le segment.

Ainsi l'élément de liaison selon l'invention permet, par sa structure, un montage à froid aisé, malgré la non-coïncidence des axes respectifs de la pompe et du conduit, et conserve à la liaison toutes ses qualités d'étanchéité, à chaud, c'est-à-dire lorsque les axes de la pompe et du conduit deviennent coïncidents et que des dilatations importantes se produisent.

REVENDICATIONS.

1. Elément de liaison entre la pompe primaire et le conduit de refoulement dans un surrégénérateur de type piscine, agencé pour assurer l'étanchéité entre la zone de basse pression et la zone de haute pression de la pompe et pour autoriser des déplacements horizontaux et verticaux entre la pompe et le conduit, caractérisé en ce qu'il comprend une manchette (1) s'étendant entre la partie de refoulement (6) de la pompe primaire et le conduit de refoulement (14), entre la manchette et la partie de refoulement de la pompe primaire, une liaison à rotule (3, 9) associée à des moyens d'étanchéité sphériques ( 10, 11, 12, 13), et entre la manchette et le conduit de refoulement, des moyens d'étanchéité sphériques (17, 18, 19).

2. Elément de liaison selon la revendication 1, caractérisé en ce qu'au moins une partie des moyens d'étanchéité sphériques est à segments.

3. Elément de liaison selon l'une des revendications 1 et 2, caractérisé en ce qu'au moins une partie des moyens d'étanchéité sphériques est à labyrinthe.

4. Elément de liaison selon l'une des revendications 1 à 3, caractérisé en ce qu'il comporte en outre des moyens de guidage de la manchette dans le conduit de refoulement, à des fins de simplification du montage.

0112212